# EUROPÄISCHE PATENTSCHRIFT

(11) **EP 3 849 740 B1**
(45) Veröffentlichungstag und Bekanntmachung des Hinweises auf die Patenterteilung: **20.04.2022**
(21) Anmeldenummer: 19786934.0
(22) Anmeldetag: 09.10.2019
(51) Int. Cl.: B23K 26/042, B23K 26/03, B23K 26/04, B23K 26/38, B23K 101/18, B23K 101/16, B23K 26/08

(54) **VERFAHREN UND VORRICHTUNG ZUM LASERSCHNEIDEN EINER BLECHPLATINE AUS EINEM KONTINUIERLICH GEFÖRDERTEN BLECHBAND**
METHOD AND DEVICE FOR LASER CUTTING A TAILORED BLANK FROM A CONTINUOUSLY CONVEYED SHEET STRIP
PROCÉDÉ ET DISPOSITIF POUR DÉCOUPER AU LASER UNE PLATINE EN TÔLE À PARTIR D'UNE BANDE DE TÔLE CONVOYÉE EN CONTINU

(30) Priorität: 16.10.2018 DE 102018125620
(43) Veröffentlichungstag der Anmeldung: 21.07.2021
(73) Patentinhaber: Schuler Pressen GmbH, 91093 Heßdorf (DE)
(72) Erfinder: SCHIEBER, Frank, 91056 Erlangen (DE); KLINKER, Karsten, 91334 Hemhofen (DE); GROSSE, Jan-Peter, 91096 Möhrendorf (DE); SEITZ, Alexander, 91054 Erlangen (DE)
(74) Vertreter: Dr. Gassner & Partner mbB
(86) Internationale Anmeldenummer: PCT/EP2019/077339
(87) Internationale Veröffentlichungsnummer: WO 2020/078792

(56) Entgegenhaltungen:
- WO-A1-2016/181499
- DE-B3-102011 003 395
- DE-B4-112014 006 909
- US-A1- 2018 257 177

## Beschreibung

Die Erfindung betrifft ein Verfahren und eine Vorrichtung zum Schneiden einer Blechplatine aus einem kontinuierlich in eine Transportrichtung geförderten Blechband mittels zumindest einer Laserschneidvorrichtung (siehe z.B. US 2018/257177 A1).

Ein solches Verfahren sowie eine solche Vorrichtung sind beispielsweise aus der EP 3 007 851 B1 bekannt. Nach dem bekannten Verfahren wird ein Blechband von einem coil abgewickelt. Das Blechband wird mittels einer Transporteinrichtung kontinuierlich in eine Transportrichtung gefördert. Dabei durchläuft das Blechband zumindest eine Laserschneidvorrichtung. Die Laserschneidvorrichtung umfasst ein Portal, mit dem ein Laserschneidkopf sowohl in Transportrichtung als auch in eine senkrecht dazu verlaufende y-Richtung hin- und her bewegbar ist. Das Portal ist mit einer Steuerung steuerbar, so dass der Laserschneidkopf entlang eines vorgegebenen Schneidwegs bewegt werden kann.

Die EP 0 503 488 B2 offenbart ein Verfahren zum Laserschneiden sowie einen Laserschneidkopf. Beim Verfahren zum Laserschneiden werden ein fokussierter Laserstrahl und ein Gasstrahl durch eine Schneiddüse geführt. Ein Abstand zwischen dem Werkstück und der Schneiddüse wird kapazitiv gesteuert. Als Sensor für die kapazitive Steuerung des Abstands wird ein gegenüber der Schneiddüse isolierter Sensorring eingesetzt.

Beim Schneiden einer Blechplatine aus einem kontinuierlich in eine Transportrichtung geförderten Blechband wird nach dem Stand der Technik stets ein innerhalb des Blechbands beginnender Schneidweg gewählt, welcher vom Band-Inneren her in Richtung einer Bandkante verläuft. Beim Erreichen der Bandkante kann es wegen im Blechband befindlichen Spannungen sein, dass sich die Blechplatine relativ zum Blechband hebt oder senkt. Dabei kann es zu einer Kollision mit einem an der Schneiddüse angebrachten kapazitiven Abstandsensor kommen. Um dem entgegenzuwirken, wird nach dem Stand der Technik die Abstandsmessung kurz vor Erreichen der Bandkante abgeschaltet. Ferner wird der Laserschneidkopf um einen vorgegebenen Betrag angehoben. Dann wird der Laserschneidkopf über das Blechband bis zum Beginn eines neuen Schneidwegs verfahren. Anschließend wird die Abstandssensorik wieder in Betrieb genommen und der Laserschneidkopf wieder in Richtung des Blechbands abgesenkt.

Das bekannte Verfahren ist wegen des erforderlichen Ab- und Anschaltens der Abstandssensorik sowie des An- und Abhebens des Laserschneidkopfs zeitaufwendig. Abgesehen davon ist es mit dem bekannten Verfahren nicht möglich, das Blechband von der Bandkante her zum Band-Inneren zu schneiden, da die Abstandssensorik außerhalb des Blechbands keine verwertbaren Abstandswerte liefert.

Aufgabe der Erfindung ist es, die Nachteile nach dem Stand der Technik zu beseitigen. Es sollen insbesondere ein Verfahren und eine Vorrichtung angegeben werden, mit denen das Schneiden einer Blechplatine aus einem kontinuierlich in eine Transportrichtung geförderten Blechband mit verbesserter Effektivität möglich ist.

Diese Aufgabe wird durch die Merkmale der Patentansprüche 1 und 8 gelöst.

Zweckmäßige Ausgestaltungen der Erfindung ergeben sich aus den Merkmalen der Patentansprüche 2 bis 7 und 9 bis 14.

Nach Maßgabe der Erfindung wird ein Verfahren zum Schneiden einer Blechplatine aus einem kontinuierlich in eine Transportrichtung geförderten Blechband mittels zumindest einer Laserschneidvorrichtung mit folgenden Schritten vorgeschlagen:
Bereitstellen einer Laserschneidvorrichtung mit zumindest einem eine Schneiddüse aufweisenden Laserschneidkopf, welcher mittels einer Steuerung entlang eines zur Geometrie der Blechplatine korrespondierenden vorgegebenen Schneidwegs bewegbar ist,
taktweises Messen eines Abstands zwischen der Schneiddüse und einer Oberfläche des Blechbands an zumindest einer bezüglich der Schneiddüse radial außenliegenden Position mittels einer ersten Abstandsmesseinrichtung,
Steuern einer Bewegung des Laserschneidkopfs derart, dass bei nicht in Überdeckung mit dem Blechband befindlicher Schneiddüse die erste Abstandsmesseinrichtung stets in Überdeckung mit dem Blechband bleibt,
wobei die erste Abstandsmesseinrichtung lediglich einen an einer rotierbaren Schneiddüse angebrachten Abstandssensor umfasst, wobei der Abstandssensor jeweils in eine Position rotiert wird, bei welcher er in Überdeckung mit dem Blechband verbleibt, wenn die Schneiddüse nicht in Überdeckung mit dem Blechband ist oder mehrere Abstandssensoren zur Messung des Abstands zwischen der Schneiddüse und der Oberfläche des Blechbands an mehreren verschiedenen, bezüglich der Schneiddüse radial außenliegenden Positionen umfasst, wobei mittels der ersten Abstandsmesseinrichtung der Abstand zwischen der Schneiddüse und der Oberfläche des Blechbands an mehreren verschiedenen, bezüglich der Schneiddüse radial außenliegenden Positionen gemessen wird, und
Bewegen der Schneiddüse aus einer ersten Position, welche nicht in Überdeckung mit dem Blechband ist, in eine zweite Position in Überdeckung mit dem Blechband, wobei eine Höhe der Schneiddüse bezüglich der Oberfläche des Blechbands unter Verwendung der von der ersten Abstandsmesseinrichtung gelieferten ersten Abstandswerte geregelt wird, wenn die Schneiddüse von der ersten Position in Richtung der zweiten Position bewegt wird,
wobei zumindest ein Abschnitt des Schneidwegs am Rand des Blechbands oder eines im Blechband befindlichen Durchbruchs beginnt und zum Inneren des Blechbands verläuft, wobei beim Bewegen der Schneiddüse aus der ersten in die zweite Position ein durch die Schneiddüse austretender Laserstahl erzeugt wird.

Im Sinne der vorliegenden Erfindung wird unter dem Begriff "radial außen liegende Position" eine Position verstanden, welche von einem Umfangsrand der Schneiddüse radial beabstandet ist. Ein radialer Abstand beträgt dabei zumindest 1 mm, vorzugsweise zumindest 2 mm, besonders bevorzugt zumindest 3 mm, insbesondere zumindest 5 mm. Ein maximaler Abstand der radial außenliegenden Positionen bezüglich des Umfangsrands der Schneiddüse beträgt zweckmäßigerweise 30 mm, vorzugsweise 25 mm, besonders bevorzugt 20 mm.

Indem erfindungsgemäß taktweise in der Umgebung der Schneiddüse deren Abstand zur Oberfläche des Blechbands gemessen wird, kann nunmehr die Bandkante erkannt werden. Es ist damit möglich, eine Bewegung des Laserschneidkopfs so zu steuern, dass bei nicht in Überdeckung mit dem Blechband befindlicher Schneiddüse die erste Abstandsmesseinrichtung stets in Überdeckung mit dem Blechband bleibt. Infolgedessen kann mit der in Überdeckung mit dem Blechband befindlichen Abstandsmesseinrichtung weiterhin ein Abstand zwischen der Schneiddüse und dem Blechband gemessen werden. Mit dem erfindungsgemäßen Verfahren ist es nun insbesondere möglich, Schneidwege auch von außen her ins Innere des Blechbands zu führen. Das eröffnet neue Freiheiten in der Gestaltung der Schneid- und Verfahrwege der Laserschneidköpfe. Es ist insbesondere möglich, Blechplatinen einer gegebenen Geometrie mit kürzeren Verfahrwegen zu realisieren. Damit können Blechplatinen aus einem kontinuierlich in eine Transportrichtung geförderten Blechband mit verbesserter Effektivität geschnitten werden.

Gemäß der Erfindung beginnt ein Abschnitt des Schneidwegs am Rand des Blechbands oder eines im Blechband befindlichen Durchbruchs und verläuft zum Inneren des Blechbands hin.

Nach einer weiteren vorteilhaften Ausgestaltung wird die Erzeugung eines im Schneidbetrieb durch die Schneiddüse austretenden Laserstahls zeitweise unterbrochen, wenn sich die Schneiddüse nicht in Überdeckung mit dem Blechband befindet. Der Laserstrahl kann bei Wiederaufnahme des Schneidbetriebs kurz vor Erreichen des Blechbands aktiviert werden, d. h., wenn sich die Schneiddüse noch nicht in Überdeckung mit dem Blechband befindet. Gemäß der Erfindung wird

beim Bewegen der Schneiddüse aus der ersten in die zweite Positionen ein durch die Schneiddüse austretender Laserstrahl erzeugt wird. Damit kann sichergestellt werden, dass der Schnitt am Rand des Blechbands bzw. in einen Durchbruch im Blechband mündet.

Nach einer weiteren besonders vorteilhaften Ausgestaltung können Schneidparameter zur Erzeugung des Laserstrahls geändert werden, wenn sich die Schneiddüse in der ersten Position befindet. In der ersten Position ist die Schneiddüse nicht in Überdeckung mit dem Blechband. Indem in der ersten Position Schneidparameter geändert werden, kann beispielsweise die Schneidgeschwindigkeit erhöht oder erniedrigt werden. Es kann z. B. ein Blechband mit einer abweichenden Dicke geschnitten werden.

Gemäß der Erfindung wird mittels der ersten Abstandsmesseinrichtung der Abstand zwischen der Schneiddüse und der Oberfläche des Blechbands an mehreren verschiedenen, bezüglich der Schneiddüse radial außenliegenden Positionen gemessen. Damit ist es möglich, eine Umgebung der Schneiddüse allseitig gleichzeitig zu beobachten.

Die Schneiddüse kann Bestandteil einer zweiten Abstandsmesseinrichtung sein und mittels der zweiten Abstandsmesseinrichtung kann ein zweiter Abstandswert gemessen werden. Zur Regelung des Abstands zwischen der Schneiddüse und der Oberfläche des Blechbands können die ersten und/oder zweiten Abstandswerte verwendet werden. Das vorgeschlagene Verfahren ist redundant und weist im praktischen Betrieb eine besonders hohe Zuverlässigkeit auf.

Beim Vorsehen zweier Abstandsmesseinrichtungen kann eine von der zweiten Position in die erste Position erfolgende Bewegung des Laserschneidkopfs angehalten werden, wenn einer der beiden Abstandswerte oder eine Differenz zwischen den beiden Abstandswerten größer als ein vorgegebener Grenzwert ist. Vorteilhafterweise werden zum Messen der ersten und zweiten Abstandswerte jeweils kapazitive oder optische erste oder zweite Abstandsmesseinrichtungen verwendet. Bei den optischen Abstandsmesseinrichtungen kann es sich beispielsweise um Laserabstandsmesseinrichtungen handeln.

Nach weiterer Maßgabe der Erfindung wird eine Vorrichtung zum Schneiden einer Blechplatine aus einem kontinuierlich in eine Transportrichtung geförderten Blechband vorgeschlagen, umfassend:
eine Transporteinrichtung zum kontinuierlichen Transport eines Blechbands in eine Transportrichtung,
zumindest eine Laserschneidvorrichtung mit zumindest einem eine Schneiddüse aufweisenden Laserschneidkopf, welcher an einem Portal in Transportrichtung
und in eine senkrecht zur Transportrichtung verlaufende y-Richtung hin- und her bewegbar gehalten ist,eine Steuerung zum Bewegen des Laserschneidkopfs entlang eines zur Geometrie der Blechplatine korrespondierenden Schneidwegs,eine erste Abstandmesseinrichtung zum taktweisen Messen eines Abstands zwischen der Schneiddüse und einer Oberfläche des Blechbands an zumindest einer bezüglich der Schneiddüse radial außenliegenden Position,eine Regelung zum Regeln des Abstands zwischen der Schneiddüse und einer Oberfläche des Blechbands,wobei mittels der Steuerung eine Bewegung des Laserschneidkopfs so gesteuert wird, dass bei nicht in Überdeckung mit dem Blechband befindlicher Schneiddüse die erste Abstandsmesseinrichtung stets in Überdeckung mit dem Blechband bleibt,wobei die erste Abstandsmesseinrichtung lediglich einen an einer rotierbaren Schneiddüse angebrachten Abstandssensor umfasst, so dass der Abstandssensor jeweils in eine Position rotiert werden kann, bei welcher er in Überdeckung mit dem Blechband verbleibt, wenn die Schneiddüse nicht in Überdeckung mit dem Blechband ist oder (ii) mehrere Abstandssensoren zur Messung des Abstands zwischen der Schneiddüse und der Oberfläche des Blechbands an mehreren verschiedenen, bezüglich der Schneiddüse radial außenliegenden Positionen umfasst, undwobei mittels der Regelung eine Höhe der Schneiddüse bezüglich der Oberfläche des Blechbands unter Verwendung der von der ersten Abstandsmesseinrichtung gelieferten ersten Abstandswerte geregelt wird, wenn die Schneiddüse aus einer ersten Position, welche nicht in Überdeckung mit dem Blechband ist, in Richtung einer zweiten Position, welche in Überdeckung mit dem Blechband ist, bewegt wird,wobei zumindest ein Abschnitt des Schneidwegs am Rand des Blechbands oder eines im Blechband befindlichen Durchbruchs beginnt und zum Inneren des Blechbands verläuft,wobei die Steuerung so hergerichtet ist, dass beim Bewegen der Schneiddüse von der ersten in die zweite Position ein durch die Schneiddüse austretender Laserstahl erzeugt wird.

Unter dem Begriff "Abstand zwischen der Schneiddüse und einer Oberfläche des Blechbands" wird der Abstand einer Öffnungsebene der Schneiddüse zur Oberfläche des Blechbands verstanden. Unter dem Begriff "Höhe der Schneiddüse bezüglich der Oberfläche des Blechbands" wird ein Abstand zwischen der Öffnungsebene der Schneiddüse und einer gedachten Oberfläche des Blechbands verstanden, welche sich über den Rand des Blechbands oder einen Durchbruch im Blechband hinweg erstreckt.

Bei der vorgeschlagenen Vorrichtung kann es sich bei der "Transporteinrichtung" beispielsweise um eine Walzenrichtmaschine, um Transportwalzen oder andere Einrichtungen handeln, mit denen ein Blechband kontinuierlich in eine Transportrichtung bewegt werden kann. Bei der "Steuerung" handelt sich zweckmäßigerweise um eine Prozessrechnersteuerung, einem Mikrocomputer oder dgl., mit dem insbesondere die Bewegungen des Laserschneidkopfs gesteuert werden können. Die Steuerung kann auch eine "Regelung" umfassen. D. h. die Steuerung kann nicht nur zur zweidimensionalen Bewegung des Laserschneidkopfs gemäß vorgegebener Schneid- und Verfahrwege, sondern auch zum Regeln eines vorgegebenen Abstands der Schneiddüse gegenüber der Oberfläche des Blechbands hergerichtet sein.

Die Steuerung ist so hergerichtet bzw. programmiert, dass der Schneidweg auf der Grundlage der ersten Abstandswerte derart gesteuert wird, dass die erste Abstandsmesseinrichtung sich stets in Überdeckung mit dem Blechband befindet. Infolgedessen ist eine Messung des Abstands zwischen der Schneiddüse und der Oberfläche des Blechbands auch dann noch möglich, wenn sich die Schneiddüse außerhalb des Blechbands befindet. Die Schneiddüse kann im vorgegebenen Abstand bezüglich der Oberfläche des Blechbands von außen her in Richtung der Bandkante geführt werden. Mittels des aus der Schneiddüse austretenden Laserstrahls kann sodann von der Bandkante her zum Band-Inneren geschnitten werden.

Ferner kann die Steuerung so hergerichtet sein, dass ein Schneidvorgang mittels des Laserschneidkopfs erst dann gestartet wird, wenn einer der beiden Abstandswerte kleiner als der vorgegebene Grenzwert ist. Das ermöglicht insbesondere ein Schneiden einer Blechplatine beginnend an der Bandkante und in Richtung zum Band-Inneren hin.

Die erste und/oder die zweite Abstandsmesseinrichtung können kapazitive oder optische erste und zweite Abstandsmesseinrichtungen sein. Die erste Abstandsmesseinrichtung umfasst einen oder mehrere 2. Abstandssensoren, welche zweckmäßigerweise am Laserschneidkopf angebracht sind. Nach einer besonders vorteilhaften Ausgestaltung sind die ersten Abstandssensoren im selben radialen Abstand bezüglich einer Achse der Schneiddüse angebracht. Ferner sind die ersten Abstandssensoren bezüglich einer Öffnungsebene der Schneiddüse in axialer Richtung im selben Abstand angebracht. Das ermöglicht eine vereinfachte Messung und Auswertung der ersten Abstandswerte.

Nach einer weiter vorteilhaften Ausgestaltung ist die Schneiddüse Bestandteil einer zweiten Abstandsmesseinrichtung und mittels der zweiten Abstandsmesseinrichtung wird ein zweiten Abstandswert gemessen. Ein zweiten Abstandssensor der zweiten Abstandsmesseinrichtung kann z. B. die Schneiddüse radial umgreifen.

Wegen der weiteren vorteilhaften Ausgestaltungen der Vorrichtung wird auf die bereits zum Verfahren beschriebenen Merkmale verwiesen, welche ebenfalls vorteilhafte Ausgestaltungen der Vorrichtung bilden können.

Nachfolgend werden das Verfahren und die Vorrichtung anhand der Zeichnungen näher erläutert. Es zeigen:
- Fig. 1: eine schematische Draufsicht auf eine Vorrichtung zum Schneiden von Blechplatinen,
- Fig. 2: eine schematische Seitenansicht eines Laserschneidkopfs,
- Fig. 3: eine schematische Schnittansicht gemäß der Schnittlinie A-A' in Fig. 2,
- Fig. 4: eine weitere schematische Schnittansicht durch einen Laserschneidkopf,
- Fig. 5: eine Draufsicht auf einen Blechbandabschnitt mit Schneid- und Verfahrwegen gemäß eines nicht erfindungsgemäßen Beispiels und
- Fig. 6: eine Draufsicht auf einen Blechbandabschnitt mit erfindungsgemäßen Schneid- und Verfahrwegen.

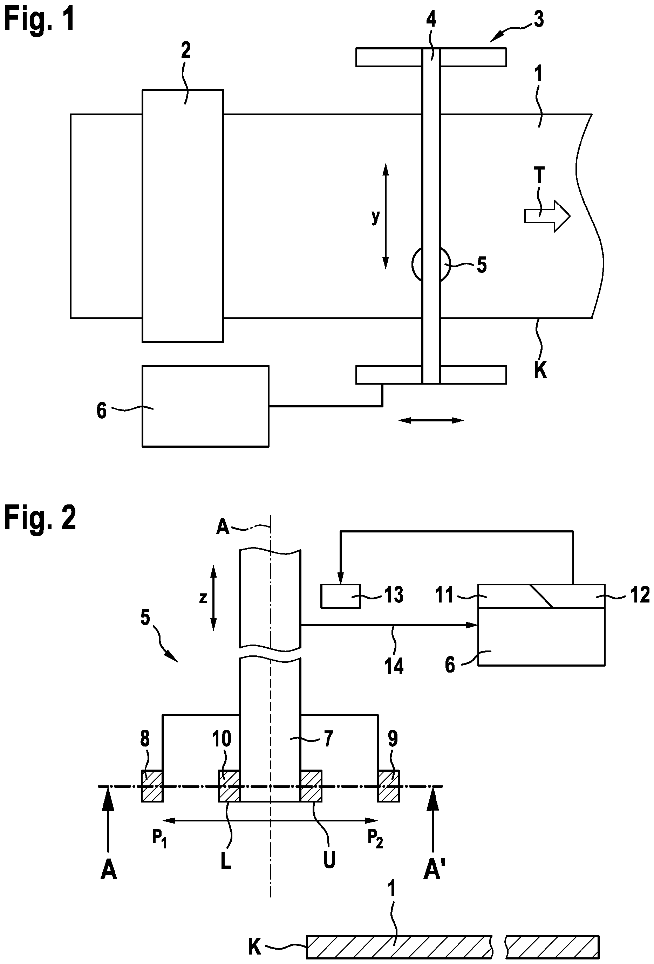

In Fig. 1 ist ein Blechband 1 durch eine Transporteinrichtung 2 geführt. Bei der Transporteinrichtung 2 kann es sich beispielsweise um eine Walzenrichtmaschine handeln. Mit dem Bezugszeichen 3 ist allgemein eine Laserschneidvorrichtung bezeichnet, bei der an einem Portal 4 ein Laserschneidkopf 5 angebracht ist. Der Laserschneidkopf 5 ist in und entgegen einer Transportrichtung T sowie in und entgegen einer senkrecht zur Transportrichtung T verlaufenden y-Richtung y bewegbar. Ferner ist der Laserschneidkopf 5 eine senkrecht zur y- sowie zur Transportrichtung T verlaufenden z-Richtung bewegbar, so dass ein Abstand zwischen dem Laserschneidkopf 5 und einer Oberfläche des Blechbands 1 veränderbar ist.

Mit dem Bezugszeichen 6 ist eine Steuerung bezeichnet, welche insbesondere mit dem Portal 4 zum Austausch von Signalen verbunden ist. Mittels der Steuerung 6 kann das Portal 4 derart gesteuert werden, dass der Laserschneidkopf 5 auf einem vorgegebenen, zur Geometrie einer herzustellenden Blechplatine korrespondierenden Schneidweg geführt wird. Ferner kann mit der Steuerung 6 ein Abstand zwischen dem Laserschneidkopf 5 und einer Oberfläche des Blechbands 1 geregelt werden. - Am Portal 4 können auch mehrere Laserschneidköpfe 5 bewegbar angebracht sein.

Fig. 2 zeigt eine schematische Seitenansicht des Laserschneidkopfs 5. Eine Schneiddüse 7 des Laserschneidkopfs 5 dient dem Austritt von Schneidgas. Ferner tritt durch die Schneiddüse 7 ein Laserstrahl L aus. Eine mit dem Laserstrahl etwa deckungsgleiche Achse der Schneiddüse 7 ist mit dem Bezugszeichen A bezeichnet. An einer ersten radial außenliegenden Position P₁ der Schneiddüse 7 ist ein erster Abstandssensor 8 eines ersten Abstandsmesseinrichtung angebracht. An einer zweiten radial außenliegenden Position P₂ ist zweckmäßigerweise ein zweiter Abstandssensor 9 angebracht, welcher ebenfalls Bestandteil der ersten Abstandsmesseinrichtung ist. Bei den Abstandssensoren 8, 9 kann es sich um kapazitive oder optische Abstandssensoren handeln. Bei den in Fig. 2 gezeigten Ausführungsbeispielen sind die erste 8 und die zweite Abstandsmesseinrichtung 9 etwa im selben radialen Abstand bezüglich der Achse A angeordnet. Es kann allerdings auch sein, dass die erste 8 und die zweite Abstandsmesseinrichtung 9 in einem verschiedenen radialen Abstand bezüglich der Achse A angeordnet sind.

Mit dem Bezugszeichen 10 ist ein weiterer Abstandssensor einer zweiten Abstandsmesseinrichtung bezeichnet, welche in radialer Richtung die Schneiddüse 7 unmittelbar umgibt. Der weitere Abstandssensor 10 ist also bezüglich der Schneiddüse 7 an einer radial innenliegenden Position vorgesehen.

Ein Umfangsrand der Schneiddüse 7 ist mit dem Bezugszeichen U bezeichnet. Eine "radial außenliegende Position" im Sinne der vorliegenden Erfindung liegt dann vor, wenn die jeweilige Abstandssensor 8, 9 der ersten Abstandsmesseinrichtung in einem Abstand von zumindest 2 mm, vorzugsweise zumindest 5 mm, besonders bevorzugt zumindest 10 mm vom Umfangsrand U bzw. einer äußeren Umfangsfläche der Schneiddüse 7 angeordnet ist.

Die Steuerung 6, bei der es sich um einen Computer handeln kann, ist mit einer Vergleichseinrichtung 11 sowie einer Regeleinrichtung 12 versehen. Bei der Vergleichs- 11 und der Regeleinrichtung 12 kann es sich um entsprechend hergerichtete Programmabschnitte der Steuerung 6 handeln. Mit dem Bezugszeichen 13 ist ein Stellglied bezeichnet, welches mit der Regeleinrichtung 12 gekoppelt ist. Mittels des Stellglieds 13 kann der Laserschneidkopf 5 bzw. die Schneiddüse 7 in z-Richtung z angehoben und abgesenkt werden. Mit dem Bezugszeichen 14 ist eine Signalleitung bezeichnet, über welche die von den Abstandsmesseinrichtungen gemessenen Messwerte an die Steuerung 6 übermittelt werden.

Die Funktion der Vorrichtung ist folgende:
Mittels der Steuerung 6 werden (hier nicht gezeigte) Antriebseinrichtungen am Portal 4 derart angesteuert, dass der Laserschneidkopf 5 entlang eines vorgegebenen Schneidwegs über das in Transportrichtung T kontinuierlich bewegte Blechband 1 bewegt wird. Während der Bewegung des Laserschneidkopfs 5 werden mittels der ersten Abstandsmesseinrichtung taktweise bzw. quasi-kontinuierlich die jeweiligen ersten Abstände zur Oberfläche des Blechbands 1 gemessen. Die entsprechenden ersten Abstandswerte werden über die Signalleitung 14 an die Steuerung 6 übermittelt. Die ersten Abstandswerte werden mittels der Vergleichseinrichtung 11 verglichen. Sobald einer der beiden Abstandswerte einen vorgegebenen Grenzwert übersteigt oder eine Differenz zwischen den Abstandswerten außerhalb eines vorgegebenen Grenzwerts liegt, wird ein Abschaltsignal erzeugt und an die Steuerung 6 übermittelt. Infolgedessen wird die Bewegung des Laserschneidkopfs 5 angehalten, und zwar derart, dass einer der ersten Abstandssensoren 8, 9 in Überdeckung mit dem Blechband 1 verbleibt. Mit dem in Überdeckung mit dem Blechband 1 befindlichen Abstandssensor 8, 9 wird der Abstand
der Laserschneiddüse 7 zum Blechband weiterhin innerhalb eines vorgegebenen Bereichs gehalten werden. Es ist also in Abkehr vom Stand der Technik nicht mehr erforderlich, den Laserschneidkopf 5 vor dem Überfahren der Bandkante anzuheben. Abgesehen davon ist es möglich, den Laserschneidkopf 5 mittels der Steuerung 6 entlang eines nächsten Schneidwegs zu bewegen, welcher von der Bandkante zum Inneren des Blechbands hin verläuft. Die nunmehr mögliche Führung eines Schneidwegs von der Bandkante zum Inneren des Blechbands hin schafft neue Freiheiten in der Schneidstrategie. Es können Schneidwege geändert und Verfahrwege verkürzt werden. Damit kann die Zeit zur Herstellung einer Blechplatine reduziert werden.

Wie aus Fig. 2 weiter hervorgeht, wird die Bewegung des Laserschneidkopfs 5 zweckmäßigerweise so angehalten, dass ein Abstandssensor 8 und die Achse A der Schneiddüse 7 das Blechband 1 nicht mehr überdecken, jedoch der andere Abstandssensor 9 das Blechband 1 überdeckt.

Bei dem aus Fig. 2 gezeigten Ausführungsbeispiel sind zwei erste Abstandssensoren 8, 9 vorgesehen. Selbstverständlich kann es auch sein, dass zur Durchführung des erfindungsgemäßen Verfahrens eine Vorrichtung verwendet wird, bei der lediglich ein erster Abstandssensor vorgesehen ist. In diesem Fall ist die Schneiddüse 7 vorzugswiese rotierbar, so dass der daran angebrachte erste Abstandssensor 8 jeweils in eine Position rotiert werden kann, bei welcher er in Überdeckung mit dem Blechband verbleibt, wenn die Schneiddüse nicht in Überdeckung mit dem Blechband ist.

Bei einer besonders einfachen Ausgestaltung kann es ferner sein, dass der in Fig. 2 gezeigte weitere Abstandssensor 10 weggelassen wird. D. h. das erfindungsgemäße Verfahren kann auch mit einem einzigen ersten Abstandssensor 8 ausgeführt werden, welcher in einer radial außenliegenden Position P1 der Schneiddüse 7 angebracht ist. - In diesem Fall wird eine Bewegung des Laserschneidkopfs mittels der Steuerung derart gesteuert, dass der erste Abstandssensor 8 als Bestandteil der ersten Abstandsmesseinrichtung stets in Überdeckung mit dem Blechband bleibt. Mittels der ersten Abstandsmesseinrichtung wird taktweise bzw. quasi - kontinuierlich der Abstand zwischen der Schneiddüse 7 und der Oberfläche des Blechbands gemessen. Ein Abstand zwischen der Schneiddüse 7 und der Oberfläche des Blechbands wird auf der Grundlage der von der ersten Abstandsmesseinrichtung gelieferten ersten Abstandswerte geregelt. Sofern die Schneiddüse 7 sich an einer ersten Position befindet, welche nicht in Überdeckung mit dem Blechband ist, wird weiterhin die Höhe der Schneiddüse 7 bezüglich der Oberfläche des Blechbands unter Verwendung der von der ersten Abstandsmesseinrichtung gelieferten ersten Abstandswerte geregelt, wenn die Schneiddüse 7 von der ersten Position in Richtung der zweiten Position bewegt wird.

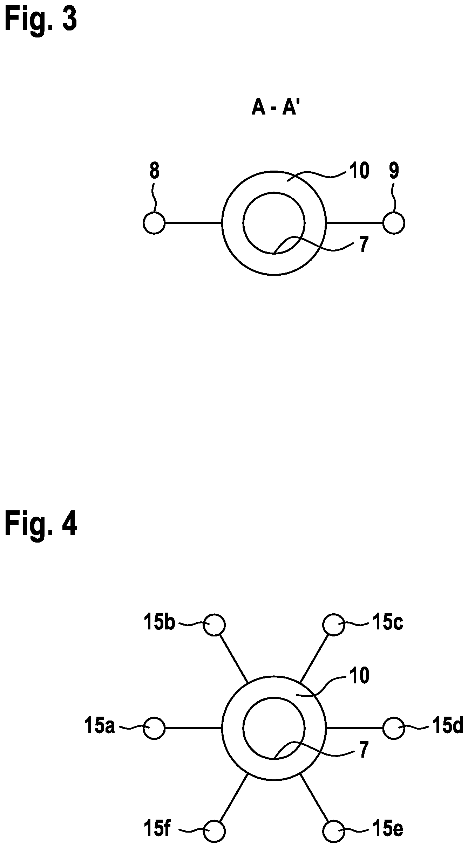

Fig. 3 zeigt einen Schnitt gemäß der Schnittlinie A-A' in Fig. 2. Zur sicheren Erkennung der Bandkante oder etwaiger Ausnehmungen im Blechband 1 kann es sein, dass in radial außenliegenden Positionen P₁, P₂ ... Pₙ mehrere erste Abstandssensoren, beispielsweise 3, 4, 5, 6 oder mehr, angebracht sind. Fig. 4 zeigt eine Schneiddüse 7, bei der in radial außenliegenden Positionen weitere erste Abstandssensoren 15a, 15b, 15c, 15d, 15e und 15f angebracht sind. Damit ist es möglich, den Abstand des gesamten radialen Umfelds der Schneiddüse 7 zu erfassen. Das erhöht weiter die Prozesssicherheit.

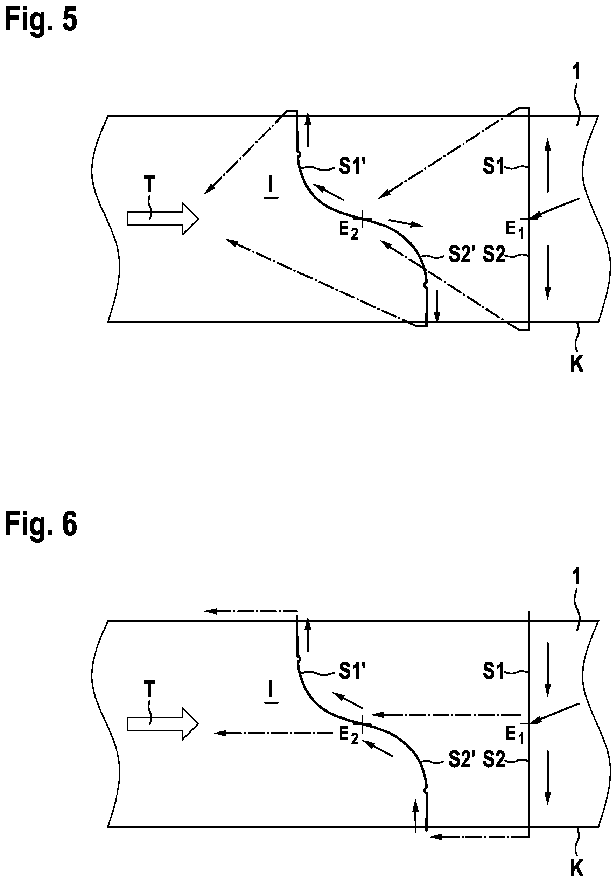

Die Fig. 5 zeigt eine Draufsicht auf ein Blechband 1, bei dem nicht erfindungsgemäße erste Schneidwege S1 eines ersten Laserschneidkopfs und zweite Schneidwege S2 eines zweiten Laserschneidkopfs jeweils ausgehend vom Band-Inneren I des Blechbands 1 und zur Bandkante K geführt sind. Zur Herstellung der Blechplatine wird zunächst der erste Laserschneidkopf über den ersten Einstichpunkt E1 gefahren. Dann erfolgt ausgehend vom ersten Einstichpunkt E1 eine Bewegung des ersten Laserschneidkopfs entlang des ersten Schneidwegs S1 bis zur Bandkante K. Sobald sich der erste Laserschneidkopf außerhalb eines Kollisionsbereichs befindet, wird ein zweiter Laserschneidkopf zum ersten Einstichpunkt E1 bewegt. Der zweite Laserschneidkopf wird entlang des zweiten Schneidwegs S2 zur Bandkante K hinbewegt.

Zur Herstellung des weiteren nicht erfindungsgemäßen ersten Schneidwegs S1' wird der erste Laserschneidkopf zum zweiten Einstichpunkt E2 bewegt. Nachfolgend wird der erste Laserschneidkopf vom zweiten Einstichpunkt E2 entlang des weiteren ersten Schneidwegs S1' hin zur Bandkante K bewegt. Analog wird der zweite Laserschneidkopf zum zweiten Einstichpunkt E2 bewegt, sobald eine Kollision mit dem ersten Laserschneidkopf nicht mehr möglich ist. Anschließend wird der zweite Laserschneidkopf vom zweiten Einstichpunkt E2 in Richtung der Bandkante K entlang des weiteren nicht erfindungsgemäßen zweiten Schneidwegs S2' bewegt.

Die Verfahrwege der Laserschneidköpfe, d. h. die Bewegungswege der Laserschneidköpfe bei abgeschalteten Laser, sind in den Fig. 5 und 6 jeweils mit unterbrochenen Pfeillinien gekennzeichnet. Die Schneidwege S1, S2 sowie die weiteren Schneidwege S1' und S2' sind mit durchgezogenen Linien kenntlich gemacht. Fig. 6 zeigt im Vergleich eine Draufsicht auf das Blechband 1 gemäß Fig. 5. Zur Herstellung der Blechplatine sind - wie in Fig. 5 - die ersten und zweiten S1, S2 und nachfolgendend der weitere erste S1' und der weitere zweite Schneidweg S2' herzustellen. Unter Verwendung der erfindungsgemäßen Vorrichtung ist es nunmehr möglich, einige der Schneidwege S1, S2, S1', S2' von der Bandkante K hin zum Band-Inneren I zu führen. Im vorliegenden Beispiel wird zunächst der erste Laserschneidkopf von der Bandkante K in Richtung des ersten Einstichpunkts E1 entlang des ersten Schneidwegs S1 bewegt. Gleichzeitig kann der zweite Laserschneidkopf vom ersten Einstichpunkt E1 in Richtung der Bandkante K entlang des zweiten Schneidwegs S2 geführt werden. Der zweite Laserschneidkopf wird dann auf einem Verfahrweg außerhalb des Blechbands 1 verfahren. Anschließend wird der zweite Laserschneidkopf von der Bandkante K in das Band-Innere I entlang des weiteren zweiten Schneidwegs S2' bewegt. Der erste Laserschneidkopf wird entlang eines Verfahrwegs vom ersten Einstichpunt E1 zum zweiten Einstichpunkt E2 verfahren. Anschließend wird der erste Laserschneidkopf aktiviert und vom zweiten Einstichpunkt E2 entlang des weiteren ersten Schneidwegs S1' hin zur Bandkante K verfahren.

Wie aus Fig. 6 ersichtlich ist, wird am ersten E1 und am zweiten Einstichpunkt E2 - im Gegensatz zu dem in Fig. 5 gezeigten Beispiel - jeweils mit lediglich einem einzigen Laserschneidkopf eingestochen. Zur Vermeidung einer Kollision der Laserschneidköpfe ist es nicht mehr erforderlich abzuwarten, bis einer der beiden Laserschneidköpfe sich in einem ausreichenden Abstand vom Einstichpunkt E1, E2 befindet. Die Herstellung des ersten S1 und des zweiten Schneidwegs S2 kann gleichzeitig beginnen. Dasselbe gilt für die Herstellung des weiteren ersten Schneidwegs S1' sowie des weiteren zweiten Schneidwegs S2'. Abgesehen davon sind die Verfahrwege im Vergleich zu dem in Fig. 5 gezeigten Beispiel kürzer. Es ergibt sich insgesamt eine deutliche Verkürzung der Prozesszeit zur Herstellung der Blechplatine.

### Bezugszeichenliste

- 1: Blechband
- 2: Transporteinrichtung
- 3: Laserschneideinrichtung
- 4: Portal
- 5: Laserschneidkopf
- 6: Steuerung
- 7: Schneiddüse
- 8: erste Abstandsmesseinrichtung
- 9: zweite Abstandsmesseinrichtung
- 10: dritte Abstandsmesseinrichtung
- 11: Vergleichseinrichtung
- 12: Regeleinrichtung
- 13: Stellglied
- 14: Signalleitung
- 15a-f: weitere Abstandmesseinrichtungen

- A: Achse
- E1: erster Einstichpunkt
- E2: zweiter Einstichpunkt
- I: Band-Inneres
- K: Bandkante
- L: Laserstrahl
- P₁: erste Position
- P₂: zweite Position
- S1: erster Schneidweg
- S1': weiterer erster Schneidweg
- S2: zweiter Schneidweg
- S2': weiterer zweiter Schneidweg
- T: Transportrichtung
- U: Umfangsrand
- y: y-Richtung
- z: z-Richtung

## Patentansprüche

1. Verfahren zum Schneiden einer Blechplatine aus einem kontinuierlich in eine Transportrichtung (T) geförderten Blechband (1) mittels zumindest einer Laserschneidvorrichtung (3) mit folgenden Schritten:
Bereitstellen einer Laserschneidvorrichtung (3) mit zumindest einem eine Schneiddüse (7) aufweisenden Laserschneidkopf (5), welcher mittels einer Steuerung (6) entlang eines zur Geometrie der Blechplatine korrespondierenden vorgegebenen Schneidwegs (S1, S2, S1', S2') bewegbar ist,
taktweises Messen eines Abstands zwischen der Schneiddüse (7) und einer Oberfläche des Blechbands (1) an zumindest einer bezüglich der Schneiddüse (7) radial außenliegenden Position (P₁, P₂) mittels einer ersten Abstandsmesseinrichtung (8,9),
Steuern einer Bewegung des Laserschneidkopfs (5) derart, dass bei nicht in Überdeckung mit dem Blechband (1) befindlicher Schneiddüse (7) die erste Abstandsmesseinrichtung (8, 9) stets in Überdeckung mit dem Blechband (1) bleibt,
wobei die erste Abstandsmesseinrichtung (i) lediglich einen an einer rotierbaren Schneiddüse (7) angebrachten Abstandssensor (8) umfasst, wobei der Abstandssensor (8) jeweils in eine Position rotiert wird, bei welcher er in Überdeckung mit dem Blechband (1) verbleibt, wenn die Schneiddüse (7) nicht in Überdeckung mit dem Blechband (1) ist oder (ii) mehrere Abstandssensoren (8,9) zur Messung des
Abstands zwischen der Schneiddüse (7) und der Oberfläche des Blechbands (1) an mehreren verschiedenen, bezüglich der Schneiddüse (7) radial außenliegenden Positionen (P₁, P₂) umfasst, wobei mittels der ersten Abstandsmesseinrichtung der Abstand zwischen der Schneiddüse (7) und der Oberfläche des Blechbands (1) an mehreren verschiedenen, bezüglich der Schneiddüse (7) radial außenliegenden Positionen (P₁, P₂) gemessen wird, und
Bewegen der Schneiddüse (7) aus einer ersten Position, welche nicht in Überdeckung mit dem Blechband (1) ist, in eine zweite Position in Überdeckung mit dem Blechband (1), wobei eine Höhe der Schneiddüse (7) bezüglich der Oberfläche des Blechbands (1) unter Verwendung der von der ersten Abstandsmesseinrichtung (8, 9) gelieferten ersten Abstandswerte geregelt wird, wenn die Schneiddüse (7) von der ersten Position in Richtung der zweiten Position bewegt wird,
wobei zumindest ein Abschnitt des Schneidwegs am Rand des Blechbands (1) oder eines im Blechband (1) befindlichen Durchbruchs beginnt und zum Inneren des Blechbands (1) verläuft, wobei beim Bewegen der Schneiddüse (7) aus der ersten in die zweite Position ein durch die Schneiddüse austretender Laserstahl erzeugt wird.

2. Verfahren nach einem der vorhergehenden Ansprüche, wobei die Erzeugung eines im Schneidbetrieb durch die Schneiddüse (7) austretenden Laserstrahls zeitweise unterbrochen wird, wenn sich die Schneiddüse (7) nicht in Überdeckung mit dem Blechband (1) befindet.

3. Verfahren nach einem der vorhergehenden Ansprüche, wobei Schneidparameter zur Erzeugung des Laserstrahls geändert werden, wenn sich die Schneiddüse (7) in der ersten Position befindet.

4. Verfahren nach einem der vorhergehenden Ansprüche, wobei die Schneiddüse (7) Bestandteil einer zweiten Abstandsmesseinrichtung (10) ist und mittels der zweiten Abstandsmesseinrichtung (10) ein zweiter Abstandswert gemessen wird.

5. Verfahren nach einem der vorhergehenden Ansprüche, wobei zur Regelung des Abstands zwischen der Schneiddüse (7) und der Oberfläche des Blechbands (1) die ersten und/oder die zweiten Abstandswerte verwendet werden.

6. Verfahren nach einem der vorhergehenden Ansprüche, wobei eine von der zweiten Position in die erste Position erfolgende Bewegung des Laserschneidkopfs (5) angehalten wird, wenn einer der beiden Abstandswerte oder eine Differenz zwischen den beiden Abstandswerten größer als ein vorgegebener Grenzwert ist.

7. Verfahren nach einem der vorhergehenden Ansprüche, wobei zum Messen der ersten und/oder zweiten Abstandswerte jeweils kapazitive oder optische Abstandsmesseinrichtungen (8, 9) verwendet werden.

8. Vorrichtung zum Schneiden einer Blechplatine aus einem kontinuierlich in eine Transportrichtung (T) geförderten Blechband (1), umfassend eine Transporteinrichtung (T) zum kontinuierlichen Transport eines Blechbands (1) in eine Transportrichtung (T),
zumindest eine Laserschneidvorrichtung (3) mit zumindest einem eine Schneiddüse (7) aufweisenden Laserschneidkopf (5), welcher an einem Portal (4) in Transportrichtung (T) und in eine senkrecht zur Transportrichtung (T) verlaufende y-Richtung (y) hin- und her bewegbar gehalten ist,
eine Steuerung (6) zum Bewegen des Laserschneidkopfs (5) entlang eines zur Geometrie der Blechplatine korrespondierenden Schneidwegs (S1, S2, S1', S2'),
eine erste Abstandmesseinrichtung (8,9) zum taktweisen Messen eines Abstands zwischen der Schneiddüse (7) und einer Oberfläche des Blechbands (1) an zumindest einer bezüglich der Schneiddüse (7) radial außenliegenden Position (P₁, P₂), eine Regelung zum Regeln des Abstands zwischen der Schneiddüse (7) und einer Oberfläche des Blechbands (1),
wobei mittels der Steuerung eine Bewegung des Laserschneidkopfs (5) so gesteuert wird, dass bei nicht in Überdeckung mit dem Blechband (1) befindlicher Schneiddüse (7) die erste Abstandsmesseinrichtung stets in Überdeckung mit dem Blechband (1) bleibt,
wobei die erste Abstandsmesseinrichtung (i) lediglich einen an einer rotierbaren Schneiddüse (7) angebrachten Abstandssensor (8) umfasst, so dass der Abstandssensor (8) jeweils in eine Position rotiert werden kann, bei welcher er in Überdeckung mit dem Blechband (1) verbleibt, wenn die Schneiddüse (7) nicht in Überdeckung mit dem Blechband (1) ist oder (ii) mehrere Abstandssensoren (8,9) zur Messung des Abstands zwischen der Schneiddüse (7) und der Oberfläche des Blechbands (1) an mehreren verschiedenen, bezüglich der Schneiddüse (7) radial außenliegenden Positionen (P₁, P₂) umfasst, und
wobei mittels der Regelung eine Höhe der Schneiddüse (7) bezüglich der Oberfläche des Blechbands (1) unter Verwendung der von der ersten Abstandsmesseinrichtung gelieferten ersten Abstandswerte geregelt wird, wenn die Schneiddüse (7) aus einer ersten Position, welche nicht in Überdeckung mit dem Blechband (1) ist, in Richtung einer zweiten Position, welche in Überdeckung mit dem Blechband (1) ist, bewegt wird,
wobei zumindest ein Abschnitt des Schneidwegs am Rand des Blechbands (1) oder eines im Blechband (1) befindlichen Durchbruchs beginnt und zum Inneren des Blechbands (1) verläuft,
wobei die Steuerung so hergerichtet ist, dass beim Bewegen der Schneiddüse (7) von der ersten in die zweite Position ein durch die Schneiddüse austretender Laserstahl erzeugt wird.

9. Vorrichtung nach Anspruch 8, wobei die Steuerung so hergerichtet ist, dass die Erzeugung eines im Schneidbetrieb durch die Schneiddüse (7) austretenden Laserstrahls zeitweise unterbrochen wird, wenn sich die Schneiddüse (7) in der ersten Position befindet.

10. Vorrichtung nach Anspruch 8 oder 9, wobei die Steuerung so hergerichtet ist, dass Schneidparameter zur Erzeugung des Laserstrahls geändert werden, wenn sich die Schneiddüse (7) in der ersten Position befindet.

11. Vorrichtung nach einem der Ansprüche 8 bis 10, wobei die Schneiddüse (7) Bestandteil einer zweiten Abstandsmesseinrichtung (10) zur Messung zweiter Abstandswerte ist.

12. Vorrichtung nach einem der Ansprüche 8 bis 11, wobei die Regelung so hergerichtet ist, dass der Abstand zwischen der Schneiddüse (7) und der Oberfläche des Blechbands (1) mittels der ersten und/oder zweiten Abstandswerte geregelt wird.

13. Vorrichtung nach einem der Ansprüche 8 bis 12, wobei die Steuerung so hergerichtet ist, dass eine vom Band-Inneren (I) über eine Bandkante (K) hinweg erfolgende Bewegung des Laserschneidkopfs (5) angehalten wird, wenn einer der beiden Abstandswerte oder eine Differenz zwischen den beiden Abstandswerten größer als ein vorgegebener Grenzwert ist.

14. Vorrichtung nach einem der Ansprüche 8 bis 13, wobei die ersten und/oder zweiten Abstandsmesseinrichtungen kapazitive und/oder optische Abstandsmesseinrichtungen (8, 9) sind.

## Claims

1. Method for cutting a sheet metal blank from a sheet metal strip (1) continuously conveyed in a transport direction (T) by means of at least one laser cutting device (3), comprising the following steps:
providing a laser cutting device (3) with at least one laser cutting head (5) having a cutting nozzle (7), which can be moved by means of a control unit (6) along a predetermined cutting path (S1, S2, S1', S2') corresponding to the geometry of the sheet metal blank,
cyclic measurement of a distance between the cutting nozzle (7) and a surface of the sheet metal strip (1) at at least one radially outer position (P₁, P₂) with respect to the cutting nozzle (7) by means of a first distance measuring device (8, 9), controlling a movement of the laser cutting head (5) in such a way that, when the cutting nozzle (7) is not in overlap with the sheet metal strip (1), the first distance measuring device (8, 9) always remains in overlap with the sheet metal strip (1), wherein the first distance measuring device (i) comprises only one distance sensor (8) attached to a rotatable cutting nozzle (7), wherein the distance sensor (8) is rotated to a position in which it remains in overlap with the sheet metal strip (1) when the cutting nozzle (7) is not in overlap with the sheet metal strip (1) or (ii) comprises several distance sensors (8, 9) for measuring the distance between the cutting nozzle (7) and the surface of the sheet metal strip (1) at several different positions (P₁, P₂) which are radially outside the cutting nozzle (7), wherein the distance between the cutting nozzle (7) and the surface of the sheet metal strip (1) is measured at a plurality of different positions (P₁, P₂) which are radially outwardly located with respect to the cutting nozzle (7) by means of the first distance measurement device, and
moving the cutting nozzle (7) from a first position not in overlap with the sheet metal strip (1) to a second position in overlap with the sheet metal strip (1),
wherein a height of the cutting nozzle (7) with respect to the surface of the sheet metal strip (1) is controlled using the first distance values provided by the first distance measuring means (8, 9) when the cutting nozzle (7) is moved from the first position towards the second position,
wherein at least a section of the cutting path starts at the edge of the sheet metal strip (1) or of an aperture located in the sheet metal strip (1) and runs to the interior of the sheet metal strip (1), wherein when the cutting nozzle (7) is moved from the first to the second position, a laser beam (L) emerging through the cutting nozzle (7) is generated.

2. Method according to any one of the preceding claims, wherein the generation of a laser beam (L) emerging through the cutting nozzle (7) during cutting operation is temporarily interrupted when the cutting nozzle (7) is not in overlap with the sheet metal strip (1).

3. Method according to any one of the preceding claims, wherein cutting parameters for generating the laser beam (L) are changed when the cutting nozzle (7) is in the first position.

4. Method according to any one of the preceding claims, wherein the cutting nozzle (7) is part of a second distance measuring device (10) and a second distance value is measured by means of the second distance measuring device (10).

5. Method according to any one of the preceding claims, wherein the first and/or the second distance values are used to control the distance between the cutting nozzle (7) and the surface of the sheet metal strip (1).

6. Method according to any one of the preceding claims, wherein a movement of the laser cutting head (5) occurring from the second position to the first position is stopped when one of the two distance values or a difference between the two distance values is greater than a predetermined limit value.

7. Method according to any one of the preceding claims, wherein capacitive or optical distance measuring devices (8, 9) are used in each case for measuring the first and/or second distance values.

8. Apparatus for cutting a sheet metal blank from a sheet metal strip (1) continuously conveyed in a transport direction (T), comprising a transport device (T) for continuously transporting a sheet metal strip (1) in a transport direction (T),
at least one laser cutting device (3) having at least one laser cutting head (5) which has a cutting nozzle (7) and is held on a gantry (4) such that it can be moved back and forth in the transport direction (T) and in a y-direction (y) running perpendicular to the transport direction (T),
a control unit (6) for moving the laser cutting head (5) along a cutting path (S1, S2, S1', S2') corresponding to the geometry of the sheet metal blank,
a first distance measuring device (8, 9) for cyclically measuring a distance between the cutting nozzle (7) and a surface of the sheet metal strip (1) at at least one radially outer position (P₁, P₂) with respect to the cutting nozzle (7),
a control for regulating the distance between the cutting nozzle (7) and a surface of the sheet metal strip (1),
wherein a movement of the laser cutting head (5) is controlled by means of the control unit (6) in such a way that, when the cutting nozzle (7) is not in overlap with the sheet metal strip (1), the first distance measuring device always remains in overlap with the sheet metal strip (1),
wherein the first distance measuring device
(i) comprises only one distance sensor (8) attached to a rotatable cutting nozzle (7), so that the distance sensor (8) can be rotated in each case to a position in which it remains in overlap with the sheet metal strip (1), when the cutting nozzle (7) is not in overlap with the sheet metal strip (1), or
(ii) comprises a plurality of distance sensors (8, 9) for measuring the distance between the cutting nozzle (7) and the surface of the sheet metal strip (1) at a plurality of different positions (P₁, P₂) located radially outwardly with respect to the cutting nozzle (7), and
wherein by means of the control a height of the cutting nozzle (7) with respect to the surface of the sheet metal strip (1) is controlled using the first distance values provided by the first distance measuring device when the cutting nozzle (7) is moved from a first position which is not in overlap with the sheet metal strip (1) towards a second position which is in overlap with the sheet metal strip (1),
wherein at least a section of the cutting path starts at the edge of the sheet metal strip (1) or of an opening located in the sheet metal strip (1) and runs to the interior of the sheet metal strip (1),
wherein the control is adapted to generate a laser beam exiting through the cutting nozzle (7) when the cutting nozzle is moved from the first to the second position.

9. Apparatus according to claim 8, wherein the control unit is adapted to temporarily interrupt generation of a laser beam exiting through the cutting nozzle (7) in cutting operation when the cutting nozzle (7) is in the first position.

10. Apparatus according to claim 8 or 9, wherein the control unit is adapted to change cutting parameters for generating the laser beam when the cutting nozzle (7) is in the first position.

11. Apparatus according to any one of claims 8 to 10, wherein the cutting nozzle (7) is part of a second distance measuring device (10) for measuring second distance values.

12. Apparatus according to any one of claims 8 to 11, wherein the control unit is adapted to control the distance between the cutting nozzle (7) and the surface of the sheet metal strip (1) by means of the first and/or second distance values.

13. Apparatus according to any one of claims 8 to 12, wherein the control unit is arranged to stop a movement of the laser cutting head (5) occurring from the strip interior (I) across a strip edge (K) when one of the two distance values or a difference between the two distance values is greater than a predetermined limit value.

14. Apparatus according to any one of claims 8 to 13, wherein the first and/or second distance measuring devices are capacitive and/or optical distance measuring devices (8, 9).

## Revendications

1. Procédé de découpe d'un larget à partir d'un feuillard (1) transporté en continu dans une direction de transport (T) au moyen d'au moins un dispositif de découpe laser (3) comprenant les étapes suivantes consistant à :
fournir un dispositif de découpe laser (3) comportant au moins une tête de découpe laser (5) présentant une buse de découpe (7), ladite tête de découpe laser étant mobile au moyen d'une commande (6) le long d'un trajet de coupe (S1, S2, S1', S2') prédéfini correspondant à la géométrie du larget,
mesurer de façon cadencée une distance entre la buse de découpe (7) et une surface du feuillard (1) à au moins une position (P₁, P₂) radialement à l'extérieur par rapport à la buse de découpe (7) au moyen d'un premier système de mesure de distance (8, 9),
commander un mouvement de la tête de découpe laser (5) de façon à ce que, lorsque la buse de découpe (7) n'est pas recouverte par le feuillard (1), le premier système de mesure de distance (8, 9) reste toujours recouvert par le feuillard (1), en ce que le premier système de mesure de distance
(i) comprend seulement un capteur de distance (8) monté sur une buse de découpe (7) rotative, en ce que le capteur de distance (8) est respectivement tourné dans une position, dans laquelle il reste recouvert par le feuillard (1), lorsque la buse de découpe (7) n'est pas recouverte par le feuillard (1) ou
(ii) comporte plusieurs capteurs de distance (8, 9) destinés à mesurer la distance entre la buse de découpe (7) et la surface du feuillard (1) à plusieurs positions (P₁, P₂) différentes, radialement à l'extérieur par rapport à la buse de découpe (7), en ce que la distance entre la buse de découpe (7) et la surface du feuillard (1) est mesurée à plusieurs positions (P₁, P₂) différentes, radialement à l'extérieur par rapport à la buse de découpe (7), au moyen du premier système de mesure de distance, et
déplacer la buse de découpe (7) d'une première position, qui n'est pas recouverte par le feuillard (1), vers une seconde position recouverte par le feuillard (1), en ce qu'une hauteur de la buse de découpe (7) est réglée par rapport à la surface du feuillard (1) à l'aide des premières valeurs de distance livrées par le premier système de mesure de distance (8, 9), lorsque la buse de découpe (7) est déplacée de la première position en direction de la seconde position,
en ce qu'au moins une section du trajet de coupe commence au bord du feuillard (1) ou d'un passage se trouvant dans le feuillard (1) et s'étend vers l'intérieur du feuillard (1), en ce qu'un faisceau laser sortant est généré par la buse de découpe lors du déplacement de la buse de découpe (7) de la première à la seconde position.

2. Procédé selon l'une des revendications précédentes, en ce que la génération d'un faisceau laser sortant en mode découpe est interrompue temporairement par la buse de découpe (7), lorsque la buse de découpe (7) n'est pas recouverte par le feuillard (1).

3. Procédé selon l'une des revendications précédentes, en ce que des paramètres de découpe sont modifiés pour la génération du faisceau laser, lorsque la buse de découpe (7) se trouve dans la première position.

4. Procédé selon l'une des revendications précédentes, en ce que la buse de découpe (7) est une composante d'un second système de mesure de distance (10) et qu'une seconde valeur de distance est mesurée au moyen du second système de mesure de distance (10).

5. Procédé selon l'une des revendications précédentes, en ce que les premières et/ou les secondes valeurs de distance sont utilisées pour le réglage de la distance entre la buse de découpe (7) et la surface du feuillard (1).

6. Procédé selon l'une des revendications précédentes, en ce qu'un déplacement de la tête de découpe laser (5) se produisant de la seconde position à la première position s'arrête, lorsque l'une des deux valeurs de distance ou une différence entre les deux valeurs de distance est supérieure à une valeur limite prédéfinie.

7. Procédé selon l'une des revendications précédentes, en ce que des systèmes de mesure de distance (8, 9) respectivement capacitifs ou optiques sont utilisés pour la mesure des premières et/ou des secondes valeurs de distance.

8. Dispositif de découpe d'un larget à partir d'un feuillard (1) transporté en continu dans une direction de transport (T), comportant
un dispositif de transport (T) pour le transport continu d'un feuillard (1) dans une direction de transport (T),
au moins un dispositif de découpe laser (3) comportant au moins une tête de découpe laser (5) présentant une buse de découpe (7), ladite tête de découpe laser étant maintenue de manière mobile tant sur un portique (4) dans la direction de transport (T) que dans une direction y (y) perpendiculaire à la direction de transport (T),
une commande (6) pour déplacer la tête de découpe laser (5) le long d'un trajet de coupe (S1, S2, S1', S2') correspondant à la géométrie du larget,
un premier système de mesure de distance (8, 9) pour la mesure cadencée d'une distance entre la buse de découpe (7) et une surface du feuillard (1) à au moins une position (P₁, P₂) radialement à l'extérieur par rapport à la buse de découpe (7),
un réglage pour régler la distance entre la buse de découpe (7) et une surface du feuillard (1),
en ce qu'un déplacement de la tête de découpe laser (5) est commandé au moyen de la commande de façon à ce que le premier système de mesure de distance reste toujours recouvert par le feuillard (1) lorsque la buse de découpe (7) n'est pas recouverte par le feuillard (1),
en ce que en ce que le premier système de mesure de distance (i) comprend seulement un capteur de distance (8) monté sur une buse de découpe (7) rotative, de sorte que le capteur de distance (8) peut respectivement être tourné dans une position dans laquelle il reste recouvert par le feuillard (1), lorsque la buse de découpe (7) n'est pas recouverte par le feuillard (1) ou (ii) comporte plusieurs capteurs de distance (8, 9) destinés à mesurer la distance entre la buse de découpe (7) et la surface du feuillard (1) à plusieurs positions (P₁, P₂) différentes, radialement à l'extérieur, par rapport à la buse de découpe (7), et
en ce qu'une hauteur de la buse de découpe (7) est au moyen du réglage réglée par rapport à la surface du feuillard (1) à l'aide des premières valeurs de distance livrées par le premier système de mesure de distance, lorsque la buse de découpe (7) est déplacée d'une première position, qui n'est pas recouverte par le feuillard (1), en direction d'une seconde position, qui est recouverte par le feuillard (1),
en ce qu'au moins une section du trajet de coupe commence au bord du feuillard (1) ou d'un passage se trouvant dans le feuillard (1) et s'étend vers l'intérieur du feuillard (1),
en ce que la commande est préparée de manière à générer un faisceau laser sortant par la buse de découpe lors du déplacement de la buse de découpe (7) de la première à la seconde position.

9. Dispositif selon la revendication 8, en ce que la commande est préparée de manière à ce que la génération d'un faisceau laser sortant en mode découpe soit interrompue temporairement par la buse de découpe (7), lorsque la buse de découpe (7) se trouve dans la première position.

10. Dispositif selon la revendication 8 ou 9, en ce que la commande est préparée de manière à ce que des paramètres de découpe soient modifiés pour la génération du faisceau laser, lorsque la buse de découpe (7) se trouve dans la première position.

11. Dispositif selon l'une des revendications 8 à 10, en ce que la buse de découpe (7) est une composante d'un second système de mesure de distance (10) pour la mesure de secondes valeurs de distance.

12. Dispositif selon l'une des revendications 8 à 11, en ce que le réglage est préparé de manière à ce que la distance entre la buse de découpe (7) et la surface du feuillard (1) soit réglée au moyen des premières et/ou des secondes valeurs de distance.

13. Dispositif selon l'une des revendications 8 à 12, en ce que la commande est préparée de manière à ce qu'un déplacement de la tête de découpe laser (5) s'effectuant depuis l'intérieur de la bande (I) au-delà d'un bord de la bande (K) soit arrêté, lorsque l'une des deux valeurs de distance ou une différence entre les deux valeurs de distance est supérieure à une valeur limite prédéfinie.

14. Dispositif selon l'une des revendications 8 à 13, en ce que les premiers et/ou seconds systèmes de mesure de distance sont des systèmes de mesure de distance (8, 9) capacitifs et/ou optiques.
